# FASCICULE DE BREVET EUROPEEN

(11) **EP 2 088 261 B1**
(45) Date de publication et mention de la délivrance du brevet: **09.06.2010**
(21) Numéro de dépôt: 09151439.8
(22) Date de dépôt: 27.01.2009
(51) Int. Cl.: E04H 15/64, F16B 5/06

(54) **Ensemble d'éléments pour la constitution d'un abri provisoire, notamment d'une tente**
Einheit aus Elementen zum Bau einer provisorischen Unterkunft, insbesondere Zelt
Set of elements for forming a provisional shelter, in particular a tent

(30) Priorité: 06.02.2008 FR 0800616
(43) Date de publication de la demande: 12.08.2009
(73) Titulaire: LP Tent, 38540 Grenay (FR)
(72) Inventeur: Robba, Carlo, 69720, St Laurent de Mure (FR)
(74) Mandataire: Jeannet, Olivier

(56) Documents cités:
- EP-A- 0 134 074
- WO-A-02/08549
- DE-C1- 3 439 921

## Description

La présente invention concerne un ensemble d'éléments pour la constitution d'un abri provisoire, notamment d'une tente.

Il est connu de réaliser une tente au moyen d'éléments incluant des éléments de constitution d'une armature de support et des pièces de toile pouvant être mises en place sur cette armature pour constituer les parois et le toit de la tente. L'armature comprend des poteaux incluant des profilés à gorges, et les pièces de toile comprennent, le long de leurs bords destinés à être reliés à ces poteaux, des joncs propres à être engagés en coulissement dans les gorges des poteaux.

Ce type d'assemblage permet d'obtenir une liaison résistante et étanche du bord d'une toile à un poteau. Il a en revanche pour inconvénient de rendre relativement difficile et long à réaliser l'engagement d'un jonc tout au long du poteau, cet engagement devant se faire par l'extrémité supérieure ou inférieure du poteau. Cet inconvénient est important lorsqu'une série de tentes doit être montée et démontée rapidement.

Un poteau d'une tente est fréquemment télescopique, ayant un élément inférieur de plus faible section qui coulisse à l'intérieur d'un élément supérieur de plus forte section ; une gorge de cet élément inférieur ne peut recevoir le jonc destiné à être mis en place dans une gorge de l'élément supérieur, ce qui conduit soit à laisser la partie inférieure de la pièce de toile non reliée à l'élément inférieur, soit à trouver des moyens plus ou moins empiriques pour réaliser une liaison imparfaite de cette partie inférieure à cet élément inférieur. Le document WO 02/08549 illustre un matériel de ce genre. Pour remédier à cet inconvénient, il a été conçu de prévoir, sur le bord de la pièce de toile, deux joncs successifs, de diamètres différents, l'un étant adapté à être engagé dans la gorge de l'élément inférieur et l'autre étant adapté à être engagé dans la gorge de l'élément supérieur. La mise en place de ces deux joncs reste cependant relativement difficile à réaliser.

La présente invention vise à remédier à cet inconvénient.

L'ensemble d'éléments qu'elle concerne comprend des éléments d'armature permettant de constituer une armature de support et des pièces de toile pouvant être mises en place sur cette armature, les éléments d'armature comprenant des profilés à gorges, et les pièces de toile comprenant, le long de parties de leurs bords destinées à être reliées à ces profilés à gorges, des joncs propres à être engagés en coulissement dans les gorges des éléments d'armature, au moins un élément d'armature étant télescopique et incluant un élément extérieur ayant au moins une gorge et un élément intérieur.

Selon l'invention,
- l'ensemble d'éléments comprend au moins une baguette équipée, à une première extrémité, d'un doigt pouvant être engagé à l'intérieur de la gorge dudit élément extérieur et, à sa deuxième extrémité, d'un moyen d'immobilisation par rapport audit élément intérieur ou à une pièce reliée à cet élément intérieur, et
- au moins une pièce de toile inclut ledit jonc au niveau de la partie de son bord destinée à s'étendre le long dudit élément extérieur et inclut, au niveau de la partie de son bord destiné à s'étendre le long dudit élément intérieur, un moyen d'assemblage de ce bord à cette baguette.

Ainsi, la partie de la pièce de toile destinée à s'étendre le long de l'élément extérieur comprend un jonc destiné à être engagé dans la gorge de cet élément extérieur, et la partie de cette pièce de toile destinée à s'étendre le long de l'élément intérieur est assemblée à une baguette destinée à être maintenue à proximité dudit élément intérieur; le maintien de cette baguette est réalisé, d'une part, par engagement du doigt que comprend ladite première extrémité de la baguette dans la gorge de l'élément extérieur et, d'autre part, par immobilisation de ladite deuxième extrémité de la baguette par rapport à l'élément intérieur ou à une pièce reliée à cet élément intérieur.

L'assemblage de la partie de la pièce de toile destinée à s'étendre le long de l'élément intérieur peut ainsi être réalisé de manière particulièrement simple et rapide, par mise en place de cette baguette, avec une bonne étanchéité et un bon aspect visuel. La longueur du jonc devant être engagée sur un élément d'armature est notablement réduite, permettant de faire gagner un temps appréciable au cours d'une opération de montage ou de démontage d'une tente.

L'élément intérieur pourrait être purement circulaire, et la baguette pourrait alors venir à proximité immédiate de la paroi de cet élément intérieur. De préférence, toutefois, cet élément intérieur comprend au moins une gorge non rétentive, dans laquelle peut être reçue la baguette. L'encastrement partiel de cette baguette dans cette gorge ainsi réalisé permet de renforcer l'étanchéité de l'assemblage et améliore encore l'aspect visuel de celui-ci.

De préférence, le doigt que comprend ladite première extrémité de la baguette est mobile en coulissement selon l'axe longitudinal de la baguette, entre une position rétractée, dans laquelle la première extrémité de la baguette peut être positionnée en face de l'extrémité de la gorge de l'élément extérieur, et une position sortie, dans laquelle ce doigt est engagé dans cette gorge, et la baguette comprend des moyens d'actionnement du doigt entre ces positions rétractée et sortie. Ces moyens d'actionnement peuvent notamment comprendre un ergot relié au pion, perpendiculairement à l'axe longitudinal de celui-ci, qui dépasse sur l'extérieur de la baguette. Cet ergot peut être actionné manuellement.

Le doigt est avantageusement associé à un ressort qui le maintient normalement dans ladite position sortie.

Il suffit ainsi de relâcher le doigt pour que celui-ci soit amené automatiquement en position sortie par le ressort.

Ledit moyen d'immobilisation que comprend ladite deuxième extrémité de la baguette peut notamment inclure un doigt identique ou similaire à celui que comprend ladite première extrémité de cette baguette. Ce doigt peut également être mobile en coulissement selon l'axe longitudinal de la baguette, entre des positions rétractée, de mise en place, et sortie, d'immobilisation, et être rappelé par un ressort.

Les extrémités de la baguette peuvent ainsi être assemblées de manière indifférenciée à l'élément extérieur, d'une part, et à l'élément intérieur ou à la pièce reliée à celui-ci, d'autre part.

Lesdits moyens d'assemblage de la baguette à la pièce de toile peuvent comprendre un ourlet aménagé le long du bord de la pièce de toile, formant un passant destiné à recevoir la baguette.

Dans ce cas, avantageusement, la baguette présente, vue en section transversale, une forme "en goutte d'eau", c'est-à-dire comprend une zone arrondie et une extension radiale effilée.

Cette forme permet à la baguette de remplir complètement le volume délimité par le passant, et d'être ainsi précisément adaptée à la forme de ce volume. Un jeu substantiel de la baguette par rapport au passant est ainsi éliminé, évitant l'exercice de sollicitations répétées sur les coutures du passant lorsque, par exemple, du vent secoue la toile.

L'invention sera bien comprise, et d'autres caractéristiques et avantages de celle-ci apparaîtront, en référence au dessin schématique annexé, représentant, à titre d'exemple non limitatif, une forme de réalisation préférée d'éléments permettant la constitution d'une tente, qu'elle concerne.
La figure 1 représente, vus de côté, plusieurs de ces éléments, à savoir, de gauche à droite, la partie inférieure d'un autour de armature de tente, une baguette, et une toile destinée à former une paroi de la tente ;
les figures 2 à 5 sont des vues de ces éléments, en coupe selon respectivement les lignes II-II, III-III, IV-IV et V-V de la figure 1 ;
la figure 6 est une vue des éléments similaire à la figure 1, après assemblage de ces éléments ;
la figure 7 est une vue de côté d'une première extrémité de la baguette, à échelle agrandie ;
la figure 8 est une vue de cette baguette, en bout, et
la figure 9 est une vue de côté de la deuxième extrémité de la baguette, similaire à la figure 7.

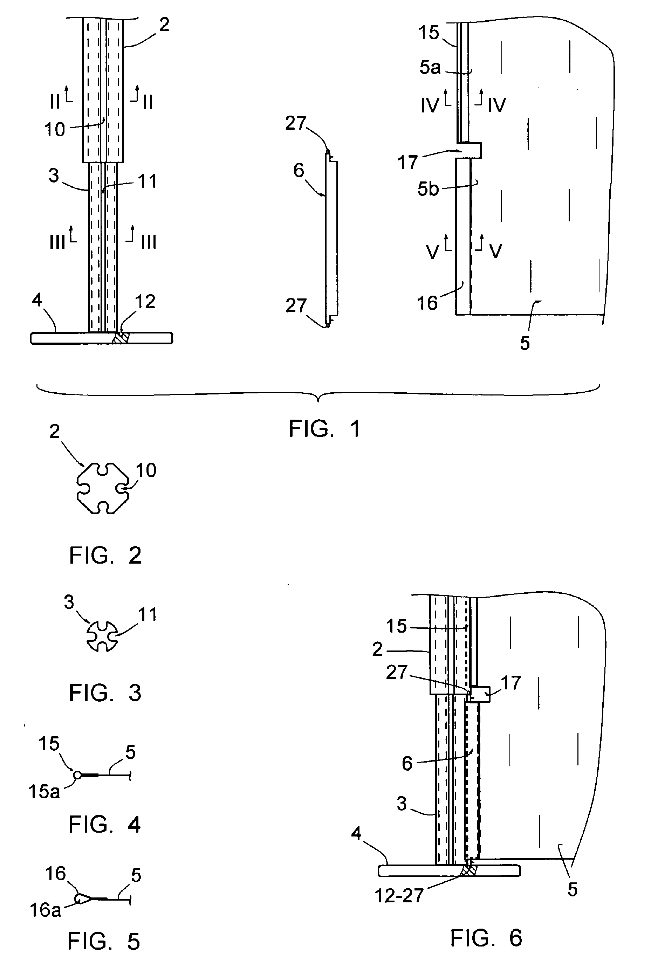

La figure 1 représente un ensemble d'éléments pour la constitution d'une tente, comprenant des éléments 2, 3, 4 permettant de constituer les poteaux d'une armature de support, des pièces de toile 5 pouvant être mises en place sur au moins un côté de ces poteaux, et des baguettes 6.

Les poteaux ont une structure télescopique, comprenant des éléments supérieurs 2 de plus forte section et des éléments inférieurs 3 de plus faible section, qui coulissent à l'intérieur des éléments 2. Les éléments inférieurs 3 sont reliés à des embases 4 d'appui au sol.

Comme le montrent les figures 2 et 3, les éléments 2 et 3 sont constitués par des profilés à gorges. Chaque élément 2 comprend quatre gorges rétentives 10, c'est-à-dire débouchant sur l'extérieur de l'élément par des fentes de largeurs inférieures au diamètre des gorges, conférant à ces gorges un profil en oméga. Chaque élément 3 comprend également quatre gorges 11, non rétentives, ayant un profil en U, qui viennent dans le prolongement des gorges 10 lorsque l'élément 3 est engagé dans l'élément 2.

Chaque embase 4 comprend, débouchant dans sa face destinée à être liée à un élément 3, quatre cavités 12 dont chacune peut recevoir de manière ajustée un doigt 27 que comprend la baguette 6, comme cela sera décrit plus loin. Chaque cavité 12 se trouve à l'aplomb d'une gorge 10 lorsque l'embase 4 est reliée à un élément 3 et que cet élément 3 est engagé dans l'élément 2.

En référence aux figures 1, 4 et 5, il apparaît que la portion inférieure de la toile 5 comprend un jonc 15 sur la partie supérieure 5a de son bord destiné à être relié à l'élément 2 et un ourlet 16 sur la partie inférieure 5b de ce même bord, l'extrémité inférieure du jonc 15 et l'extrémité supérieure de l'ourlet 16 étant séparées par une encoche 17.

Le jonc 15 présente une partie cylindrique 15a destinée à être engagée dans une gorge 10 de l'élément 2, par une extrémité de cet élément 2, et à être retenue dans cette gorge 10, cette partie cylindrique 15a présentant un diamètre inférieur à celui de la gorge 10 mais supérieur à celui de la fente par laquelle cette gorge débouche sur l'extérieur de l'élément 2. La partie cylindrique 15a est solidaire de deux parois parallèles délimitant entre elles un espace de réception du bord 5a de la toile 5, ces parois étant destinées à être fixées à ce bord par tout moyen approprié.

L'ourlet 16 forme un passant 16a destiné à recevoir la baguette 6.

L'encoche 17 est aménagée de manière à permettre la manoeuvre d'un pion 28 que comprend l'extrémité supérieure de la baguette 6, comme cela sera décrit plus en détail plus loin.

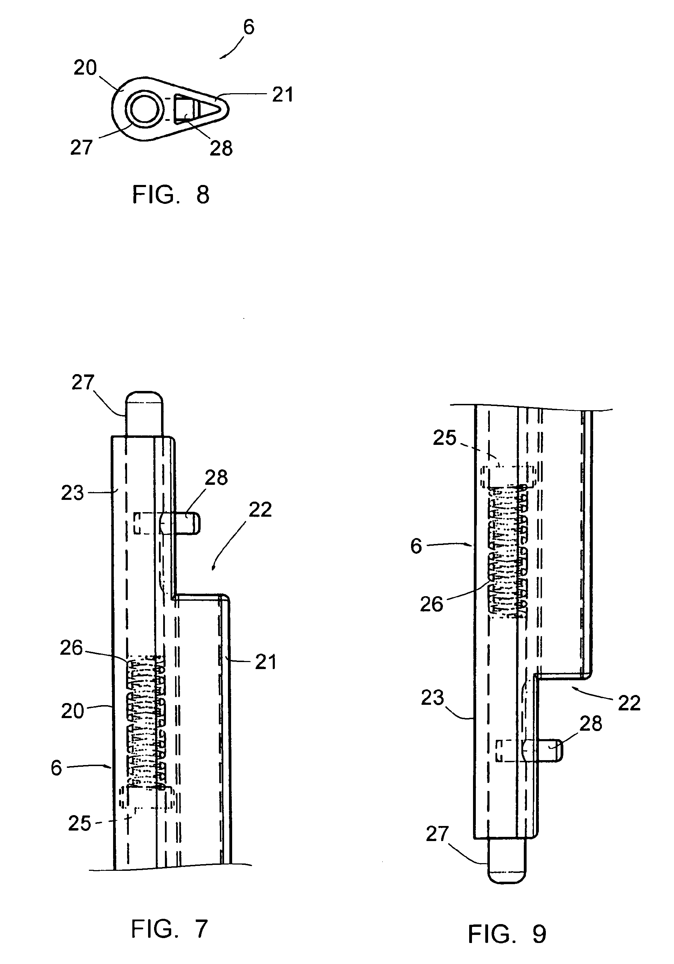

En référence aux figures 1 et 7 à 9, il apparaît que la baguette 6 présente une forme "en goutte d'eau" vue de profil (cf. figure 8), c'est-à-dire comprend une zone arrondie 20 et une extension radiale effilée 21. Vue de côté, elle présente, au niveau de ses extrémités, deux échancrures 22 aménagées dans ladite extension 21, délimitant une partie saillante 23.

La zone 20 de chaque portion d'extrémité de la baguette 6 est percée d'un alésage longitudinal débouchant dans l'extrémité de la baguette 6, et la partie saillante 23 de chaque portion d'extrémité de la baguette 6 comprend une lumière longitudinale, débouchant dans la face de cette partie 23 délimitée par l'échancrure 22, qui met en communication l'alésage avec l'extérieur.

La baguette 6 comprend également deux goupilles transversales 25 vissées en elle, formant un fond dudit alésage, et chaque partie d'alésage situé à l'extrémité de la baguette 6 reçoit un ressort 26 et un doigt 27. Le ressort 26 prend appui contre la goupille 25. Le doigt 27 comprend un alésage taraudé transversal dans lequel est vissé un pion transversal 28 engagé dans ladite lumière de ladite partie saillante 23.

Sous l'action des ressorts 26 qui leur sont associés, les doigts 27 sont normalement maintenus dans les positions sorties montrées sur les figures 7 et 9, c'est-à-dire font saillie au-delà des extrémités de la baguette 6. Ces positions sorties sont déterminées par la venue des pions 28 en butée contre la zone des parties 23 délimitant l'extrémité desdites lumières longitudinales.

Chaque ressort 26 peut être comprimé par une pression manuelle exercée sur chaque pion 28 dans le sens longitudinal de la baguette 6, permettant d'effacer entièrement à l'intérieur de la baguette 6 la partie de chaque doigt 27 faisant normalement saillie de cette baguette 6.

En pratique, comme cela se comprend en référence à la figure 6, la partie cylindrique 15a du jonc 15 est engagée dans la gorge 10 correspondante de l'élément 2, par coulissement, jusqu'à ce que l'extrémité inférieure du jonc soit située à proximité de l'extrémité inférieure de l'élément 2. La baguette 6 est alors introduite par coulissement dans le passant 16a délimité par l'ourlet 16 ; dans cette position, la partie saillante 23 supérieure se trouve dans l'encoche 17 tandis que la partie saillante 23 inférieure dépasse de l'ourlet 16.

Le doigt 27 inférieur est engagé dans la cavité 12 de l'embase 4 et le doigt 27 supérieur peut, par action sur le pion 28, être rétracté dans la baguette 6 de manière à pouvoir être amené en regard de la gorge 10, la baguette 6 venant s'encastrer partiellement dans la gorge 11 correspondante de l'élément inférieur 3 ; la pression sur le pion 28 du doigt 27 supérieur est alors relâchée, amenant ce doigt 27 à s'engager dans cette gorge 10 sous l'action du ressort 26, et réalisant ainsi l'assemblage de la partie inférieure de la toile 5 au poteau formé par les éléments 2, 3 et 4.

L'invention fournit un ensemble d'éléments pour la constitution d'un abri provisoire, notamment d'une tente, ayant les avantages déterminants de permettre de réaliser l'assemblage de la partie inférieure de la toile 5 à des poteaux de manière particulièrement simple et rapide, avec une bonne étanchéité et un bon aspect visuel. La longueur de la partie cylindrique 15a du jonc 15 devant être engagée sur l'élément 2 est notablement réduite, permettant de faire gagner un temps appréciable au cours d'une opération de montage ou de démontage d'une tente.

L'invention a été décrite ci-dessus en référence à une forme de réalisation donnée à titre d'exemple. Il va de soi qu'elle n'est pas limitée à cette forme de réalisation mais qu'elle s'étend à toutes les formes de réalisations couvertes par les revendications annexées.

## Revendications

1. Ensemble d'éléments pour la constitution d'un abri provisoire, notamment d'une tente, comprenant des éléments d'armature (2, 3, 4) permettant de constituer une armature de support et des pièces de toile (5) pouvant être mises en place sur cette armature, les éléments d'armature (2, 3, 4) comprenant des profilés à gorges, et les pièces de toile (5) comprenant, le long de parties (5a, 5b) de leurs bords destinées à être reliées à ces profilés à gorges, des joncs (15) propres à être engagés en coulissement dans les gorges (10) des éléments d'armature (2, 3, 4), au moins un élément d'armature (2, 3, 4) étant télescopique et incluant un élément extérieur (2) ayant au moins une gorge (10) et un élément intérieur (3) ;
**caractérisé :**
- **en ce qu**'il comprend au moins une baguette (6) équipée, à une première extrémité, d'un doigt (27) pouvant être engagé à l'intérieur de la gorge (10) dudit élément extérieur (2) et, à sa deuxième extrémité, d'un moyen d'immobilisation (27) par rapport audit élément intérieur (3) ou à une pièce (4) reliée à cet élément intérieur (3), et
- en ce qu'au moins une pièce de toile (5) inclut ledit jonc (15) au niveau de la partie (5a) de son bord destinée à s'étendre le long dudit élément extérieur (2) et inclut, au niveau de la partie (5b) de son bord destiné à s'étendre le long dudit élément intérieur (3), un moyen (16) d'assemblage de ce bord à cette baguette (6).

2. Ensemble d'éléments selon la revendication 1, **caractérisé en ce que** l'élément intérieur (3) comprend au moins une gorge (11) non rétentive, dans laquelle peut être reçue la baguette (6).

3. Ensemble d'éléments selon la revendication 1 ou la revendication 2, **caractérisé en ce que** le doigt (27) que comprend ladite première extrémité de la baguette (6) est mobile en coulissement selon l'axe longitudinal de la baguette (6), entre une position rétractée, dans laquelle la première extrémité de la baguette (6) peut être positionnée en face de l'extrémité de la gorge (10) de l'élément extérieur (2), et une position sortie, dans laquelle ce doigt (27) est engagé dans cette gorge (10), et **en ce que** la baguette (6) comprend des moyens (28) d'actionnement du doigt (27) entre ces positions rétractée et sortie.

4. Ensemble d'éléments selon la revendication 3, **caractérisé en ce que** lesdits moyens d'actionnement comprennent un pion (28) relié au doigt (27), perpendiculairement à l'axe longitudinal de celui-ci, qui dépasse sur l'extérieur de la baguette (6).

5. Ensemble d'éléments selon la revendication 3 ou la revendication 4, **caractérisé en ce que** le doigt (27) est associé à un ressort (26) qui le maintient normalement dans ladite position sortie.

6. Ensemble d'éléments selon l'une des revendications 1 à 5, **caractérisé en ce que** ledit moyen d'immobilisation que comprend ladite deuxième extrémité de la baguette (6) inclut un doigt (27) identique ou similaire à celui que comprend ladite première extrémité de cette baguette (6).

7. Ensemble d'éléments selon l'une des revendications 1 à 6, **caractérisé en ce que** lesdits moyens d'assemblage de la baguette (6) à la pièce de toile comprennent un ourlet (16) aménagé le long du bord de la pièce de toile (5), formant un passant (16a) destiné à recevoir la baguette (6).

8. Ensemble d'éléments selon la revendication 7, **caractérisé en ce que** la baguette (6) présente, vue en section transversale, une forme "en goutte d'eau", c'est-à-dire comprend une zone arrondie (20) et une extension radiale effilée (21).

9. Ensemble d'éléments selon l'une des revendications 1 à 8, **caractérisé en ce que** la pièce de toile (5) comprend une encoche (17) aménagée entre le jonc (15) et ledit moyen d'assemblage (16) à la baguette (6).

## Claims

1. Set of elements for forming a provisional shelter, in particular a tent, comprising structural elements (2, 3, 4) which can form a support structure, and webs (5) which can be placed on this structure, the structural elements (2, 3, 4) comprising groove sections, and the webs (5), along parts (5a, 5b) of their edges intended to be assembled to these groove sections, comprising cords (15) which can be slidingly engaged in the grooves (10) of the structural elements (2, 3, 4), at least one structural element (2, 3, 4) being telescopic and including an external element (2) having at least one groove (10) and an internal element (3);
**characterized:**
- **in that** it comprises at least one rod (6) equipped, at a first end, with a finger (27) which can be engaged inside the groove (10) of said external element (2) and, at its second end, with an immobilization means (27) relative to said internal element (3) or to a piece (4) connected to this internal element (3), and
- **in that** at least one web (5) includes said cord (15) around the part (5a) of its edge intended to extend along said external element (2) and around the part (5b) of its edge intended to extend along said internal element (3), includes a means (16) to assemble this edge to this rod (6).

2. Set of elements according to claim 1, **characterized in that** the internal element (3) comprises at least one non-retentive groove (11), in which the rod (6) can be received.

3. Set of elements according to claim 1 or claim 2, **characterized in that** the finger (27) which said first end of the rod (6) comprises is slidingly movable according to the longitudinal axis of the rod (6), between a retracted position, wherein the first end of the rod (6) can be positioned opposite the end of the groove (10) of the external element (2), and an extended position, wherein this finger (27) is engaged in this groove (10), and **in that** the rod (6) comprises means (28) to actuate the finger (27) between these retracted and extended positions.

4. Set of elements according to claim 3, **characterized in that** said means of actuation comprises a pin (28) connected to the finger (27), perpendicular to the longitudinal axis of the latter, which protrudes over the outside of the rod (6).

5. Set of elements according to claim 3 or claim 4, **characterized in that** the finger (27) is associated with a spring (26) which normally maintains it in said extended position.

6. Set of elements according to any one of claims 1 to 5, **characterized in that** said immobilization unit, which said second end of the rod (6) comprises, includes a finger (27) identical or similar to that which said first end of this rod (6) comprises.

7. Set of elements according to any one of claims 1 to 6, **characterized in that** said means to assemble the rod (6) to the web comprises a hem (16) provided along the edge of the web (5), forming a loop (16a) intended to receive the rod (6).

8. Set of elements according to claim 7, **characterized in that** the rod (6), seen in cross section, has the shape of a "water droplet", that is to say it comprises a round zone (20) and a tapered radial extension (21).

9. Set of elements according to any one of claims 1 to 8, **characterized in that** the web (5) comprises a notch (17) arranged between the cord (15) and said means of assembly (16) to the rod (6).

## Patentansprüche

1. Einheit aus Elementen zum Bau einer provisorischen Unterkunft, insbesondere Zelt, Gerüstelemente (2, 3, 4) umfassend, die die Bildung eines Traggerüsts erlauben, und Stoffteile (5), die auf diesem Gerüst platzierbar sind, wobei die Gerüstelemente (2, 3, 4) Profile mit Ausnehmungen umfassen, und die Stoffteile (5) entlang der Abschnitte (5a, 5b) ihrer Ränder, die dazu bestimmt sind, mit diesen Profilen mit Ausnehmungen verbunden zu sein, Stäbe (15) umfassen, die sich eignen, in die Ausnehmungen (10) der Gerüstelemente (2, 3, 4) geschoben zu werden, wobei mindestens ein Gerüstelement (2, 3, 4) teleskopisch ist und ein äußeres Element (2) einschließt, das mindestens eine Ausnehmung (10) und ein inneres Element (3) hat,
**dadurch gekennzeichnet,**
- **dass** sie mindestens eine Stange (6) umfasst, die an einem ersten Ende mit einem Finger (27) ausgestattet ist, der in die Ausnehmung (10) des äußeren Elements (2) einführbar ist, und an ihrem zweiten Ende ein Feststellmittel (27) in Bezug zum inneren Element (3) oder einem Teil (4), das mit diesem inneren Element (3) verbunden ist, und
- **dass** mindestens ein Stoffteil (5) den Stab (15) auf Ebene des Abschnitts (5a) seines Randes umfasst, der dazu bestimmt ist, sich entlang des äußeren Elements (2) zu erstrecken und auf Ebene des Abschnitts (5b) seines Randes, der dazu bestimmt ist, sich entlang des inneren Elements (3) zu erstrecken, ein Mittel (16) zur Verbindung dieses Randes mit dieser Stange (6) einschließt.

2. Einheit aus Elementen nach Anspruch 1, **dadurch gekennzeichnet, dass** das innere Element (3) mindestens eine nicht festhaltende Aussparung (11) umfasst, in der die Stange (6) aufnehmbar ist.

3. Einheit aus Elementen nach Anspruch 1 oder Anspruch 2, **dadurch gekennzeichnet, dass** der Finger (27), den das erste Ende der Stange (6) umfasst, entlang einer Längsachse der Stange (6) gleitend bewegbar ist zwischen einer eingezogenen Stellung, in der das erste Ende der Stange (6) gegenüber dem Ende der Ausnehmung (10) des äußeren Elements (2) positionierbar ist und einer ausgefahrenen Stellung, in der dieser Finger (27) in diese Ausnehmung (10) eingreift, und **dadurch**, dass die Stange (6) Mittel (28) zur Betätigung des Fingers (27) zwischen dieser eingezogenen und ausgefahrenen Stellung umfasst.

4. Einheit aus Elementen nach Anspruch 3, **dadurch gekennzeichnet, dass** die Betätigungsmittel einen mit dem Finger (27) verbundenen Knopf (28) umfassen, senkrecht zur Längsachse desselben, der über die Außenfläche der Stange (6) hinausragt.

5. Einheit aus Elementen nach Anspruch 3 oder Anspruch 4, **dadurch gekennzeichnet, dass** der Finger (27) mit einer Feder (26) verbunden ist, die ihn normalerweise in der ausgefahrenen Stellung hält.

6. Einheit aus Elementen nach einem der Ansprüche 1 bis 5, **dadurch gekennzeichnet, dass** das Feststellmittel, das das zweite Ende des Stange (6) umfasst, einen Finger (27) einschließt, der identisch oder ähnlich zu dem ist, den das erste Ende dieser Stange (6) umfasst.

7. Einheit aus Elementen nach einem der Ansprüche 1 bis 6, **dadurch gekennzeichnet, dass** die Mittel zur Verbindung der Stange (6) mit dem Stoffteil einen Saum (16) am Rand des Stoffteils (5) entlang umfassen, der einen Durchgang (16a) bildet, der zur Aufnahme der Stange (6) bestimmt ist.

8. Einheit aus Elementen nach Anspruch 7, **dadurch gekennzeichnet, dass** die Stange (6) im Querschnitt gesehen eine Wassertropfenform aufweist, das heißt, eine abgerundete Zone (20) und eine spitz zulaufende radiale Erweiterung (21) umfasst.

9. Einheit aus Elementen nach einem der Ansprüche 1 bis 8, **dadurch gekennzeichnet, dass** das Stoffteil (5) eine Kerbe (17) umfasst, die zwischen dem Stab (15) und dem Verbindungsmittel (16) mit der Stange (6) eingerichtet ist.
